(19) Europäisches Patentamt
European Patent Office
Office européen des brevets

(11) EP 3 067 844 A1

(12) **EUROPEAN PATENT APPLICATION**

(43) Date of publication:
**14.09.2016 Bulletin 2016/37**

(21) Application number: **15200109.5**

(22) Date of filing: **15.12.2015**

(51) Int Cl.:
***G06Q 10/08*** *(2012.01)* ***B07C 3/14*** *(2006.01)*
***G06K 9/00*** *(2006.01)* ***G06K 9/20*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **13.03.2015 JP 2015050703**

(71) Applicant: **Kabushiki Kaisha Toshiba**
**Minato-ku**
**Tokyo 105-8001 (JP)**

(72) Inventors:
- **Piao, Ying**
  **Tokyo, Tokyo 105-8001 (JP)**
- **Hamamura, Tomoyuki**
  **Tokyo, Tokyo 105-8001 (JP)**
- **Maeda, Masaya**
  **Tokyo, Tokyo 105-8001 (JP)**

(74) Representative: **Horn Kleimann Waitzhofer Patentanwälte PartG mbB**
**Ganghoferstrasse 29a**
**80339 München (DE)**

(54) **DELIVERY PROCESSOR, METHOD, AND COMPUTER READABLE STORAGE MEDIUM**

(57) A delivery processor comprising: a determiner that determines a type of an object to be delivered, and determines a recognition algorithm to be used from a plurality of recognition algorithms, based on the type of the object; and a recognizer that performs recognition processing using an image of the object and the recognition algorithm determined by the determiner.

FIG. 1

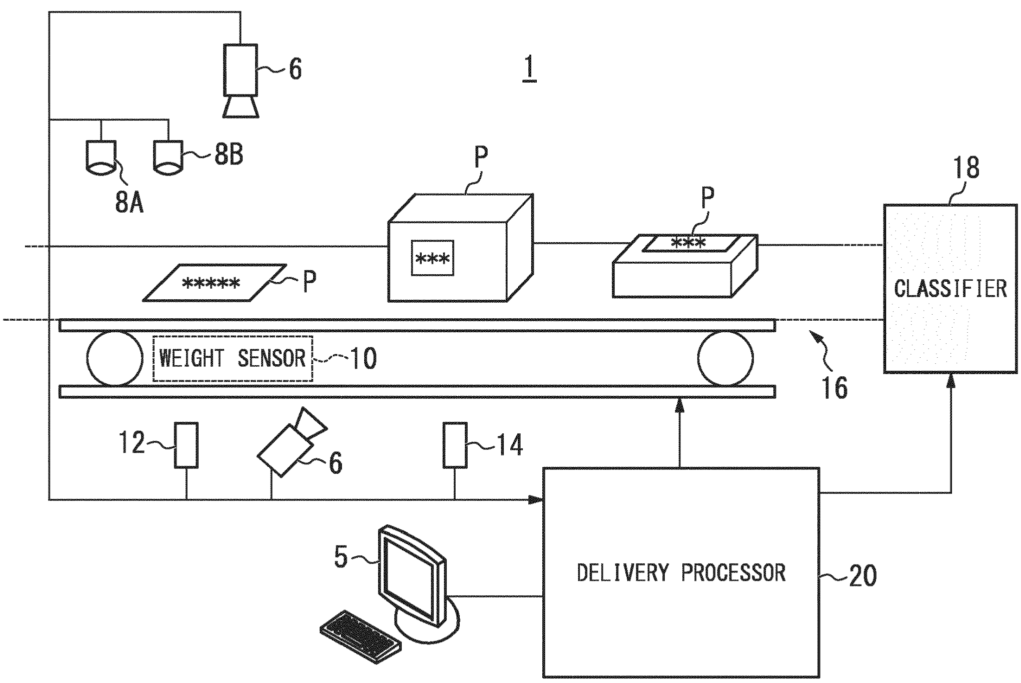


EP 3 067 844 A1

## Description

CROSS-REFERENCE TO RELATED APPLICATION

This application is based upon and claims the benefit of priority from Japanese Patent Application No. 2015-050703, filed March 13, 2015; the entire contents of which are incorporated herein by reference.

FIELD

Embodiments described herein relate generally to the field of delivery processor, method and to computer readable storage medium including a delivery processing program.

BACKGROUND

A processor may be used to determine an address for an item to be delivered by read the address from an image of the item, and using character recognition. The item may be a parcel, postcard, envelope, or the like. A user operating the conventional processor may need to manually select a recognition processing mode based on the type of item to be delivered, after which the apparatus will perform recognition processing corresponding based on the delivery item type. However, the technology requires the user to perform manual operations to utilize the apparatus, reducing user convenience.

BRIEF DESCRIPTION ON THE DRAWINGS

FIG. 1 is a schematic diagram of a delivery processing system.
FIG. 2 is a diagram illustrating a configuration example focusing on a delivery processor.
FIG. 3 is a diagram illustrating an example of a decision table.
FIG. 4 is a diagram illustrating an example of information stored as an algorithm table.
FIG. 5 is a flowchart illustrating a process flow implemented by a delivery processor.
FIG. 6 is a diagram illustrating an example of an image displayed in the display of a terminal when accepting information revisions from a user in order to determine a type of a delivery processing object.
FIG. 7 is a diagram illustrating a configuration of a modified example of a delivery processor.
FIG. 8 is a flowchart illustrating a process flow implemented by a learner.
FIG. 9 is a diagram illustrating an example of an image displayed by a tablet terminal.
FIG. 10 is a flowchart illustrating a process flow implemented by an information processor using determination conditions.
FIG. 11 is a diagram illustrating a configuration example of a delivery processor.
FIG. 12 is a diagram illustrating an example of data stored as an algorithm table.
FIG. 13 is a flowchart illustrating a process flow implemented by an information processor.
FIG. 14 is a diagram illustrating an example of an image displayed by a terminal display or a tablet.
FIG. 15 is a diagram illustrating a configuration of a delivery processor.
FIG. 16 is a diagram for explaining an example of a computational technique for finding the conveyance speed of a conveyor.
FIG. 17 is a diagram illustrating a configuration of a delivery processor.
FIG. 18 is a flowchart illustrating a process flow implemented by a delivery processor.

DETAILED DESCRIPTION

In some embodiments, a delivery processor may include, but is not limited to: a determiner that determines a type of an object to be delivered, and determines a recognition algorithm to be used from a plurality of recognition algorithms, based on the type of the object; and a recognizer that performs recognition processing using an image of the object and the recognition algorithm determined by the determiner.

In some embodiments, the type of the object to be delivered is determined based on at least one of a shape, size, weight, and one or more features of the image of the object to be delivered.

In some embodiments, the determiner determines the speed at which a conveyor conveys the object to be delivered based on the type of the object to be delivered to allow the conveyor to change in conveyance speed in accordance with the speed determined by the determiner.

In some embodiments, the delivery processor may further include, but is not limited to: a speed computer that identifies an amount of time remaining until recognition processing of the object to be delivered is complete, the speed computer dividing, by the amount of time remaining, a distance from the object to be delivered to a branch location on the conveyor, to compute the conveyance speed, at which the conveyor is conveying the object to be delivered.

In some embodiments, the delivery processor may further include, but is not limited to: a storage that stores information associating a recognition processing time for the object to be delivered, with the type of the object to be delivered, the speed computer acquires the stored information from the storage, and identifies the amount of time remaining based on the acquired stored information.

In some embodiments, the delivery processor may further include, but is not limited to: the determiner acquires an image imaged of the object to be delivered, and determines the type of the object to be delivered based on feature of the image acquired; the delivery processor further comprises: a learner that: learns a relationship between the type of the object to be delivered and feature of the image acquired, and incorporates the learned relationship into determination processing performed.

In some embodiments, the determiner: makes a display device display the type of the object to be delivered, and conditions for determining the type of the object to be delivered; changes, in accordance with an entry of changing condition, the conditions for determining the type of the object to be delivered; and performs, in accordance with an entry of at least one of additions, deletions, and revisions, at least one of additions, deletions, and revisions of the type of the object to be delivered.

In some embodiments, the delivery processor may further include, but is not limited to: a display controller that makes a display device display information, the information showing determination results made by the determiner of the delivery processor for each processed object to be delivered.

In some embodiments, a delivery method may include, but is not limited to: determining a type of an object to be delivered; determining a recognition algorithm to be used from a plurality of recognition algorithms, based on the type of the object; and performing recognition processing using an image of the object and the recognition algorithm determined.

In some embodiments, a non-transitory computer-readable storage medium that stores a computer program to be executed by a computer to perform at least: determine a type of an object to be delivered; determine a recognition algorithm to be used from a plurality of recognition algorithms, based on the type of the object; and perform recognition processing using an image of the object and the recognition algorithm determined.

Embodiments of a delivery processor, and a delivery processing system including a non-transitory computer-readable storage medium with an executable program stored thereon, are explained with reference to the drawings.

FIG. 1 is a schematic diagram of a delivery processing system. A delivery processing system 1 is a system that classifies a variety of objects P to be delivered, including home delivery parcels, postcards, and envelopes, into classification locations based on delivery address. The delivery processing system 1 may take an image of the object P to be delivered as it is conveyed by a conveyor 16 that includes, for example, a belt conveyor, a sandwich belt, or the like. The delivery processing system recognizes address information assigned to the object P to be delivered from an image imaged by an imager 6, and classifies the object P based on the recognized address information. Address information is information showing the delivery address for the object P to be delivered, and may include a name or other appellation.

The delivery processing system 1 may include a terminal 5, the imager 6, an object detector 8, a weight sensor 10, a barcode reader ("BCR") 12, a barcode writer ("BCW") 14, the conveyor 16, a classifier 18, and a delivery processor 20. The terminal 5 is a device useful for information input by an operator. The terminal 5 may include a display for displaying an image, as well as a voice, image, or other input device such as a keyboard, mouse, touch panel, or microphone. The terminal 5 and the delivery processor 20 may be connected by a local area network ("LAN") or other network, or may be integrated together.

The imager 6 images an image of the object P to be delivered as it arrives at an imaging location, and supplies the image to the delivery processor 20. The imager 6 may include a plurality of line scan type scanners, for example, which images a high definition image of the object P to be delivered while the object P to be delivered is in motion. Positioning a plurality of scanners at positions at which the scanners can image the object P to be delivered from different angles may allow the imager 6 to image multiple sides of the object P. The imager 6 may also include a camera, which images a single image of a predefined planar region.

The object detector 8 detects the three dimensional shape of the object P to be delivered. The object detector 8 may include stereo cameras 8A and 8B. The stereo cameras 8A and 8B image the object P as it arrives at an imaging location, and supply the image imaged to the delivery processor 20. The object detector 8 may also include an optical sensor such as an infrared sensor, which measures distance to the object P to be delivered, an ultrasonic sensor, or the like.

The weight sensor 10 may be disposed on an underside of a belt conveyor of the conveyor 16, and measures the weight of the object P to be delivered as it is conveyed. The weight sensor 10 measures the weight of the object P as it reaches a measurement location, and supplies the measured result to the delivery processor 20.

The BCR 12 may read in information encoded in an ID barcode that contains identification information assigned to the object P to be delivered, or an address barcode that contains address information for the object P. The BCR 12 supplies the read in information to the delivery processor 20. The BCW 14 prints an ID barcode and an address barcode based on an instruction from the delivery processor 20. The BCW 14 may print an ID barcode in which arbitrarily determined identification information is encoded, or an address barcode in which address information is encoded as a result of recognition by the delivery processor 20.

The conveyor 16 conveys the object P to be delivered from a supplier (not shown) toward the classifier 18 based on an instruction from the delivery processor 20. The conveyor 16 may include a conveyor belt, a drive pulley, and a drive motor. The drive pulley rotates due to a drive force output by the drive motor. The conveyor belt moves due to rotational force from the drive pulley and conveys the object P to be delivered.

The classifier 18 is provided on a downstream side of the conveyor 16 (a side opposite the supplier). The classifier 18 includes a plurality of stages and a plurality of classification pockets (not shown) divided into multiple of rows. The classifier 18 conveys the object P to be delivered into the classification pocket corresponding to an identified classification destination based on an instruction from the delivery processor 20.

FIG. 2 is a diagram illustrating a configuration of the delivery processor 20. The delivery processor 20 includes a communicator 21, an information acquirer 22, an information processor 24, a controller 26, and a storage 30. The information processor 24 and the controller 26 are implemented by a central processing unit ("CPU") or the like running a program stored in the storage 30. One or more of the processor 24 and the controller 26 may also be circuitry such as a large scale integration ("LSI") circuit or application specific integrated circuit ("ASIC"). The storage 30 may be implemented using a read only memory ("ROM"), a random access memory ("RAM"), a hard disk drive ("HDD"), a flash memory, or the like. The delivery processor 20 communicates with the terminal 5 using the communicator 21. The communicator 21 is an interface for connecting to a network such as a local area network ("LAN") or a wide area network ("WAN").

The information acquirer 22 is another interface for commutation with the imager 6, the object detector 8, and the weight sensor 10. The information acquirer 22 acquires images imaged by the imager 6, information detected by the object detector 8, and information sensed by the weight sensor 10. The information acquirer 22 supplies the acquired information to the information processor 24.

The information processor 24 includes a recognizer 24A and a determiner 24B. The recognizer 24A recognizes address information for the object P to be delivered based on an algorithm determined by the determiner 24B. The recognizer 24A may perform recognition processing of the object P to be delivered address information by using optical character recognition ("OCR"), for example. The recognizer 24A supplies results obtained by recognition processing to other constituent portions, such as to the controller 26.

The determiner 24B determines a type of the object P to be delivered based on information that the information acquirer 22 has acquired from the imager 6, the object detector 8, or the weight sensor 10. The term "type" when used with reference to the object P to be delivered means a classification of the object P that can be arbitrarily defined by an operator using the delivery processor 20. For example, when the operator is a postal service provider, the operator may define the types as "standard size mail", "non-standard size mail", and "parcel". If the operator is a home delivery service provider, the operator may define the types as "baggage", "letter", and the like.

Based on the image imaged by the object detector 8, the determiner 24B may recognize the size, such as a length, width, or depth dimension or the object P to be delivered, or its shape, such as whether or not the object P is flat. The determiner 24B may then determine the type of the object P to be delivered based on the recognized size or shape. The determiner 24B may also determine the type of the object P to be delivered based on a feature of the image imaged by the object detector 8, or from the weight measured by the weight sensor 10. The determiner 24B may also determine the type of the object P to be delivered based on an amount of features extracted from the image by recognition processing. The determiner 24B determines which recognition processing algorithm the recognizer 24A uses, based on the object P type.

The controller 26 controls the classifier 18 to classify the object P to be delivered into a classification destination based on recognition processing results from the recognizer 24A.

The storage 30 stores a decision table 32 and an algorithm table 34. FIG. 3 is a diagram illustrating an example of information stored as the decision table 32. The decision table 32 may include parameter data such as size, thickness, and weight associated with types of the object P to be delivered. FIG. 4 is a diagram illustrating an example of information stored as the algorithm table 34. The algorithm table may include data that associates type of the object P to be delivered with recognition algorithms. A recognition algorithm associated with a specific object P type is an optimal recognition algorithm when performing recognition processing on the type. The term optimal recognition algorithm means a recognition algorithm, which achieves a desired recognition rate within a processing time range that is not overly long. All table data may be embedded within a program as one or more functions.

FIG. 5 is a flowchart illustrating a process flow implemented by the delivery processor 20. First, at S100, the determiner 24B of the information processor 24 acquires information which has been detected by the object detector 8 and which has been measured by the weight sensor 10, through the information acquirer 22. Next, at S102, the determiner 24B references the decision table 32 and determines the type of the object P to be delivered based on the information acquired at S100. The determiner 24B may determine the type of the object P by ascertaining whether or not information acquired from the object detector 8 and from the weight sensor 10 satisfies size, thickness, weight, or other conditions in the decision table 32 associated with different object types.

Next, the determiner 24B references the algorithm table 34 at S104 in order to select a recognition algorithm corresponding to the object type determined at S102. The recognizer 24A then performs recognition processing at S106 using the recognition algorithm selected by the determiner 24B at S104. Next, at S108 the recognizer 24A supplies results of recognition processing performed at S106 to the classifier 18. Processes in the flowchart of illustrated in FIG. 5 are thus complete.

Note that, although the determiner 24B displays object P types, and conditions for determining the object P types (the parameter data in the decision table 32), revisions to the information for determining the type of the object P to be delivered may also be accepted. The determiner 24B displays the object P types, as well as associated information used in order to determine the object P types, in the display of the terminal 5. FIG. 6 is a diagram illustrating an example of an image IM displayed in the display of the terminal 5 when accepting information revisions from a user in order to determine the type of a delivery processing object. Type of the object P, and information in order to determine the type of object P, are displayed in the terminal 5 display. The determiner 24B changes the information used in order to determine the type of the object P to be delivered based on information input through an inputter of the terminal 5. For example, the determiner 24B may change the size, thickness, or weight used to determine the object P type based on information input through inputter of the terminal 5. Further, the determiner 24B may also make additions or deletions of object P types based on information input through the terminal 5 inputter.

The determiner 24B may also import parameters for the decision table 32 from a separate computer using the communicator 21.

In one or more embodiments, the type of the object P to be delivered may be determined based on information obtained from the object detector 8 and the weight sensor 10. The information used to determine the type of the object P to be delivered is not limited, however. For example, the delivery processor 20 may determine the type of the object P to be delivered based on type information that shows the object P type. The type information may be stored in an IC tag affixed to the object P to be delivered, for example, or may be a barcode affixed to the object P to be delivered that encodes the object P type. Providing the delivery processor 20 with an IC tag reader for reading in type information stored in an IC tag, or a barcode reader for reading in information encoded in the barcode, may allow determination of the object P type.

In the delivery processor 20 described above, the determiner 24B determines the type of the object P to be delivered based on information acquired from the object detector 8 and from the weight sensor 10. In addition, the recognizer 24A recognizes address information using a recognition algorithm associated with the object P to be delivered type determined by the determiner 24B. A recognition algorithm suited to the object P to be delivered type can thus be automatically selected, thus enhancing user convenience.

One or more embodiments of the delivery processor 20 may include modifications to the above disclosure. FIG. 7 is a diagram illustrating a configuration of modified example of the delivery processor 20. In addition to the configuration described above, the delivery processor 20 may further include a learner 28 that communicates with a tablet terminal 40 using the communicator 21.

The determiner 24B may acquire an image of the object P to be delivered imaged by the imager 6, or by the object detector 8, from the information acquirer 22. The determiner 24B may then compute a feature in the acquired image, and determines the type of the object P to be delivered from the computed feature. The determiner 24B may also determine the type of the object P to be delivered based on a feature of the image acquired from the object detector 8.

The learner 28 acquires the image of the object P to be delivered imaged by the imager 6, or by the object detector 8, from the information acquirer 22. The learner 28 then implements a machine learning technique to create a relationship between the feature in the image, or a feature of the image, and the object P to be delivered type, based on user operations on the tablet terminal 40, thus generating determination conditions for determining the type of the object P to be delivered. The learner 28 supplies the determination conditions generated to the determiner 24B.

The tablet terminal 40 may be a tablet device that includes a touch panel display device which displays images in a display, and also detects the locations of touch operations performed on the display. The tablet terminal 40 may also include a communications interface (not shown) for communicating with other devices. The tablet terminal 40 communicates with the communicator 21 through a network NW.

FIG. 8 is a flowchart illustrating a process flow implemented by the learner 28. A process using an amount of features in an image is explained here. First, at S150 the learner 28 displays a list of images imaged by the imager 6 on the tablet 40 for a predefined learning period. The tablet 40 accepts type designations for each image by the user at S152. The tablet 40 may display images of classifications of the object P to be delivered, and destination type regions to which the images of classifications of the object can be moved by dragging operations or the like.

FIG. 9 is a diagram illustrating an example of an image displayed by the tablet terminal 40. A1 in FIG. 9 indicates images of the object P to be delivered imaged by the imager 6, and A2 indicates regions where the images of object to be delivered P corresponding to a type A can be dragged and dropped. A3 indicates regions where images of objects P corresponding to a type B can be dragged and dropped. A user of the tablet terminal 40 may specify the type of an object to be delivered P by dragging the image of the object P displayed on the tablet terminal 40 and dropping it in a corresponding type region.

Next, at S154 the learner 28 acquires the object P to be delivered type for each image from the tablet terminal 40. The types are specified by operations of the user. The learner 28 then acquires at S156 feature computed by the determiner 24B for each image acquired during S100. At S156, the learner 28 accumulate data of relationship between the feature acquired during S100 and the type of the object P to be delivered, based on the acquired feature and the types specified by the user for each image. The learner 28 then generates determination conditions at S158 based on the accumulated data, and supplies the determination conditions to the determiner 24B. Processing according to the flowchart illustrated in FIG. 9 is thus complete. The determiner 24B may thus determine the type of the object P to be delivered using the acquired determination conditions. Note that the learner 28 may generate determination conditions using a known method such as regression analysis or decision tree analysis, based on feature in the images of object to be delivered P whose types are specified by the user. The learner 28 may also generate determination conditions using a recursive machine learning algorithm such as AdaBoost or Support Vector Machine ("SVM").

FIG. 10 is a flowchart illustrating a process flow implemented by the information processor 24 using determination conditions. First, at S180 the determiner 24B acquires an image imaged by the imager 6 or by the object detector 8. Next, at S182 the determiner 24B extracts feature from the image acquired at S180. At S184, the determiner 24B determines the type of the object P to be delivered using a set of extracted features at S182 using the determination conditions generated by the learner 28. Next, at S186 the determiner 24B selects a recognition algorithm, with reference object type determined at S184. The determiner then performs recognition processing at S186 using the recognition algorithm selected by the determiner 24B at S188. The recognizer 24A supplies results of recognition processing to the classifier 18 at S190. Processing according to the flowchart illustrated in FIG. 10 is thus completed.

The information processor 24 thus determines the type of the object P to be delivered using the determination conditions generated by the learner 28, and performs recognition processing on the object P to be delivered using a recognition algorithm corresponding to the determined type. As a result, the delivery processor 20 can thus accurately determine the object P type.

In at least one embodiment of the delivery processor 20, the conveyance speed at which the conveyor 16 conveys the object P to be delivered may be changed according to the recognition algorithm used to perform recognition processing, based on the object P type. The delivery processor 20 may otherwise be as described above.

FIG. 11 is a diagram illustrating a configuration example of a delivery processor 20A. The information processor 24 of the delivery processor 20A additionally includes a display controller 24C. The display controller 24C displays information in a display showing results of processing the object P to be delivered performed by the delivery processor 20A. The information shows object P type results obtained by the determiner 24B for each object to be delivered P processed by the delivery processor 20A. The controller 26 controls the conveyance speed of the conveyor 16 based on an instruction from the determiner 24B of the information controller 24.

FIG. 12 is a diagram illustrating an example of data stored as an algorithm table 34A. In addition to recognition algorithms, the algorithm table 34A may also include data associating object to be delivered P types with conveyance speeds at which the conveyor 16 conveys the objects P to be delivered.

FIG. 13 is a flowchart illustrating a process flow implemented by an information processor. First, at S200 the determiner 24B acquires information which has been detected by the object detector 8 and which has been measured by the weight sensor 10, through the information acquirer 22. Next, at S202 the determiner 24B references the decision table 32A and determines the type of the object P type based on the information acquired in S200. The determiner 24B then references the decision table 32A at S204 and selects a recognition algorithm corresponding to the type determined at S202. At S206, the determiner 24B selects a conveyance speed at which the conveyor 16 is to convey the object P to be delivered, corresponding to the type selected at S204. The determiner 24B then controls the conveyor 16 through the controller 26 at S208, changing the conveyance speed of the conveyor 16 to the conveyance speed selected in S206. The determiner 24B may reduce the conveyance speed of the conveyor 16 for cases where it is difficult to perform recognition processing to determine the type of the object P to be delivered type (for example, a parcel), and may increase the conveyance speed of the conveyor 16 for cases where type recognition of the object P to be delivered is easier (for example, when the object P is a postcard or an envelope). Next, at S210, the recognizer 24A implements recognition processing using the recognition algorithm selected by the determiner 24B at S204. The recognizer 24A then supplies recognition processing results to the classifier 18 at S212. Processing according to the flowchart illustrated in FIG. 13 is thus complete.

The display controller 24C may display information showing determination results for the object P type made by the determiner 24B for each object to be delivered P processed. The information shows results of delivery processor 20A processing for cases where the user desires to determine the operation state of the delivery processing system 20A. In response to user operations, the display controller 24C may display identification information for the object P to be delivered determined by the determiner 24B (illustrated in FIG. 14 as "No. 1", "No. 2", and the like), the object P type, the recognition algorithm used in recognition processing, and the conveyance speed. The identification information may be displayed in the display of the terminal 5 or in the tablet device 40. FIG. 14 is a diagram illustrating an example of an image displayed by the terminal 5 display or the tablet 40. In one or more other disclosed embodiments, an image including similar information, with the conveyance speed redacted, may be displayed.

Not only does the determiner 24B determine a recognition algorithm, the determiner 24B also changes the conveyance speed at which the conveyor 16 conveys the object P to be delivered. As a result, the time needed for conveying the object P to be delivered to the classifier 18 may be favorably changed.

In one or more embodiments, a delivery processor 20B may include a speed computer 27 that computes a conveyance speed for the conveyor 16 based on an amount of recognition processing time needed by the recognizer 24A, and on a length of a conveyance path.

FIG. 15 is a diagram illustrating a configuration of the delivery processor 20B. In addition to constituents described above, the delivery processor 20B further includes the speed computer 27.

The recognizer 24A may supplies information recognition processing progress to the speed computer 27. The speed computer 27 determines an amount of time remaining until recognition processing of the object P to be delivered is complete, based on the information acquired from the recognizer 24A. The speed computer 27 computes a conveyance speed for conveying the object P to be delivered by dividing the distance from the object P to be delivered to the classifier 18 along the conveyor 16 by the amount of time remaining. The speed computer supplies the result to the controller 26. Note that the speed computer 27 may compute a distance from the object P to be delivered to the classifier 18 along the conveyor 16 based on the conveyance speed at which the conveyor 16 is conveying the object P, acquired from the controller 26, and the length of the conveyance path of the conveyor 16 stored in advance. The speed computer 27 finds the location of the object P to be delivered in real time based on the conveyance speed at which the conveyor 16 is conveying the object P to be delivered, and computes the distance from the object P to the classifier 18 along the conveyor 16 based on the location of the object P when computing distance. The controller 26 controls the conveyor 16 to convey the object P to be delivered at a conveyance speed input by the speed computer 27.

An example of a conveyance speed computation technique used by the speed computer 27 is explained. FIG. 16 is a diagram for explaining an example of a computational technique for finding the conveyance speed of the conveyor 16. FIG. 16 shows an object to be delivered A and an object to be delivered B at times T0, T1, and T2.

At the time T0, the speed computer 27 computes a conveyance speed V1 at which the conveyor 16 conveys the objects to be delivered A and B based on the type of the object to be delivered A, which is first to arrive at the classifier 18. The conveyance speed V1 may be computed using EQ. (1). In EQ. (1), L1 denotes a length from the location of the object to be delivered A to the classifier 18, and PT1 denotes a time necessary for recognition processing of the object to be delivered A. The amount of time necessary for recognition processing of the object P to be delivered A may be predefined as a standard time needed for recognition processing of an object having the same type as the object to be delivered A.

$$V1 = L1 / PT1 \qquad \text{EQ. (1)}$$

In this case the object to be delivered B located upstream of the object to be delivered A (on a side opposite to the classifier 18) is conveyed at the conveyance speed V1 computed based on the object to be delivered A located further downstream. This state continues at the time T1.

At the time T2, the object to be delivered A arrives at the classifier 18. The speed computer 27 computes a conveyance speed V2 at which the conveyor 16 conveys the object to be delivered B, based on the type of the object to be delivered A, which arrives first at the classifier 18. The conveyance speed V2 may be computed using EQ. (2). In EQ. (2), L2 denotes the distance from the location of the object to be delivered B and the classifier 18, and PT2 denotes the amount of time necessary for recognition processing of the object to be delivered B.

$$V2 = L2 / PT2 \qquad \text{EQ. (2)}$$

The recognizer 24A may perform recognition processing for multiple objects P to be delivered in parallel if a configuration including a multi-core processor is used. In this case, if multiple objects P to be delivered are conveyed by the conveyor 16, recognition processing may have progressed by a certain amount at the point where the object P in the lead reaches the classifier 18. The amount of time necessary for recognition processing may thus be computed based on the amount of progress in recognition processing.

The speed computer 27 adjusts the speed at which the object P to be delivered is conveyed in response to the amount of progress made by the recognizer 24A. The object P to be delivered is therefore conveyed at a conveyance speed suitable for the amount of time needed for recognition processing of address information thereon. The amount of excess time used in processing can thus be further controlled.

In one or more embodiments of a delivery processor 20C, the speed computer 27 may compute the conveyance speed of the object P to be delivered based on recognition processing times stored in a processing time storing controller 25.

FIG. 17 is a diagram illustrating a configuration of the delivery processor 20C. The configuration of the delivery processor 20C is similar to that of the delivery processor 20B, further including the processing time storing controller 25.

The processing time storing controller 25 stores information associating the amount of time needed for the recognizer 24A to perform recognition processing of the object P to be delivered, with the object P type. The processing time storing controller 25 determines whether or not the stored information satisfies predefined conditions, and sends the stored information to the speed computer 27 when the predefined conditions are satisfied. The predefined conditions may include the amount of stored information reaching a specific amount, for example.

The speed computer 27 computes conveyance speeds at which the object P to be delivered is conveyed based on the information sent from the processing time storing controller 25, and supplies the computed conveyance speed to the controller 26. The speed computer 27 may refer to the stored information and compute an average recognition processing time for each object to be delivered type. The speed computer 27 may then compute the conveyance speed for conveying the object P to be delivered, dividing the distance from the object P to the classifier 18 along the conveyor 16 by the average recognition processing time.

FIG. 18 is a flowchart illustrating a process flow implemented by the delivery processor 20C. First, at S300 the determiner 24B acquires information which has been detected by the object detector 8 and which has been measured by the weight sensor 10, through the information acquirer 22. The determiner 24B then references the decision table 32 at S302, and determines the type of the object P to be delivered based on the information acquired at S300. Next, at S304, the determiner 24B references the algorithm table 34 and selects a recognition algorithm corresponding to the type determined at S302. The determiner 24B then, at S306, selects a conveyance speed for the conveyor 16 corresponding to the object P to be delivered type. At S308, the determiner 24B changes the conveyance speed of the conveyor 16 to the conveyance speed selected at S306 by controlling the conveyor 16 through the controller 26. Next, the recognizer 24A performs recognition processing at S310 using the recognition algorithm selected by the determiner 24B at S304. The recognizer 24A then supplies recognition processing results to the classifier 18 at S312, and stores the recognition processing results in a memory in the processing time storing controller 25 at S314.

Note that information showing a character recognition score computed during recognition processing, an amount of time needed for recognition processing, and whether or not address information is complete may be included in the recognition processing results.

Processing performed at S316 and S318 may be done in parallel with processing from S304 through S314. At S316, the processing time storing controller 25 may determine whether or not there are sufficient results stored for the recognition processing performed by the recognizer 24A at S314. If there is a sufficient amount of recognition processing results stored, the processing time storing controller 25 sends the stored results to the speed computer 27 at S318. Processing according to the flowchart of FIG. 18 finishes if there is not a sufficient amount of recognition processing results stored.

By following the flowchart through S318, the speed computer 27 computes an average recognition processing time for each type of object to be delivered P. The speed computer 27 computes the conveyance speed of the conveyor 16 by dividing the distance from the object P to be delivered to the classifier 18 along the conveyor 16 by the average processing time for a specific object P type.

The information processor 24 computes the conveyance speed of the object P to be delivered using the average recognition processing time for object types computed by the speed computer 27. As a result, the object P may be conveyed by the conveyor 16 at a conveyance speed appropriate for recognition processing on the object P address information. Excessive amounts of time for processing can thus be controlled.

In one or more embodiments described above, user convenience can be increased by providing a delivery processor with the recognizer 24A and the determiner 24B. The recognizer 24A performs recognition processing of information assigned to an object to be delivered based on an image of the object P to be delivered conveyed by the conveyor 16 and using one of multiple recognition algorithms. The determiner 24B determines the type of the object P to be delivered conveyed by the conveyor 16, and determines which recognition algorithm is used by the recognizer 24A for recognizing processing, based on the object P type.

A delivery processor according to one or more embodiments may include, but is not limited to: one or more software components; and one or more hardware processors that are, when executing one or more software components, configured to at least: determine a type of an object to be delivered; determine a recognition algorithm to be used from a plurality of recognition algorithms, based on the type of the object; and perform recognition processing using an image of the object and the recognition algorithm determined.

A delivery processor according to one or more disclosed embodiments is described above, but the disclosed embodiments are not limiting, and it is possible to freely make modifications, such as omitting, replacing, or changing constitutive elements, provided that such modifications do not deviate from the spirit of this disclosure. The scope of the following claims includes the embodiments described above, and modifications to the embodiments.

The term "hardware processor" may be implemented by one or more hardware components. The hardware processor is configured to execute one or more software components and configured, when executing the one or more software components, to perform one or more acts or operations in accordance with codes or instructions included in the one or more software components.

The term "circuitry" refers to a system of circuits which is configured perform one or more acts or operations. The term "circuitry" is implemented by hardware and software components.

The terms "recognizer 24A", "determiner 24B", "display controller 24C", "process time storing controller 25", "controller 26", "speed computer 27", and "learner 28" may be implemented by "circuitry", or by a combination of one or more "hardware processor" with one or more software components.

While certain embodiments processor have been described, these embodiments have been presented by way of example only, and are not intended to limit the scope of the inventions. Indeed, the novel: embodiments described herein may be embodied in a variety of other forms; furthermore, various omissions substitutions and changes in the form of the embodiments described herein may be made without departing from the spirit of the inventions. The accompanying claims and their equivalents are intended to cover such forms or modifications as would fall within the scope and spirit of the inventions.

## Claims

**1.** A delivery processor comprising:

a determiner that determines a type of an object to be delivered, the determiner determining a recognition algorithm to be used from a plurality of recognition algorithms, based on the type of the object; and
a recognizer that performs recognition processing using an image of the object and the recognition algorithm determined by the determiner.

**2.** The delivery processor according to claim 1, wherein the determiner determines the type of the object to be delivered, based on at least one of a shape, size, weight, and one or more features of the image of the object to be delivered.

**3.** The delivery processor according to claim 2, wherein the determiner determines the speed at which a conveyor conveys the object to be delivered, based on the type of the object to be delivered, to allow the conveyor to change in conveyance speed in accordance with the speed determined.

**4.** The delivery processor according to claim 3, further comprising:

a speed computer that identifies an amount of time remaining until recognition processing of the object to be delivered is complete, and the speed computer dividing, by the amount of time remaining, a distance from the object to be delivered to a branch location on the conveyor, to compute the conveyance speed, at which the conveyor is conveying the object to be delivered.

**5.** The delivery processor according to claim 4, further comprising:

a storage that stores information associating a recognition processing time for the object to be delivered, with the type of the object to be delivered,
wherein the speed computer acquires the stored information from the storage, and identify the amount of time remaining, based on the acquired stored information.

**6.** The delivery processor according to any one of claims 1 through 5,
wherein the determiner acquires an image imaged of the object to be delivered, and the determiner determines the type of the object to be delivered based on feature of the image acquired, and
wherein the delivery processor further comprises:

a learner that: learns a relationship between the type of the object to be delivered and feature of the image acquired, and the learner incorporates the learned relationship into determination processing performed.

**7.** The delivery processor according to any one of claims 1 through 6,
wherein the determiner makes a display device display the type of the object to be delivered, and conditions for determining the type of the object to be delivered;
wherein the determiner changes, in accordance with an entry of changing condition, the conditions for determining the type of the object to be delivered; and
wherein the determiner performs, in accordance with an entry of at least one of additions, deletions, and revisions, at least one of additions, deletions, and revisions of the type of the object to be delivered.

**8.** The delivery processor according to any one of claims 1 through 7, further comprising:

a display controller that makes a display device display information, the information showing determination results made by the determiner of the delivery processor for each processed object to be delivered.

**9.** A delivery method comprising:

determining a type of an object to be delivered;
determining a recognition algorithm to be used from a plurality of recognition algorithms, based on the type of the object; and
performing recognition processing using an image of the object and the recognition algorithm determined.

**10.** A non-transitory computer-readable storage medium that stores a computer program to be executed by a computer to perform at least:

determine a type of an object to be delivered;
determine a recognition algorithm to be used from a plurality of recognition algorithms, based on the type of the object; and
perform recognition processing using an image of the object and the recognition algorithm determined.

FIG. 1

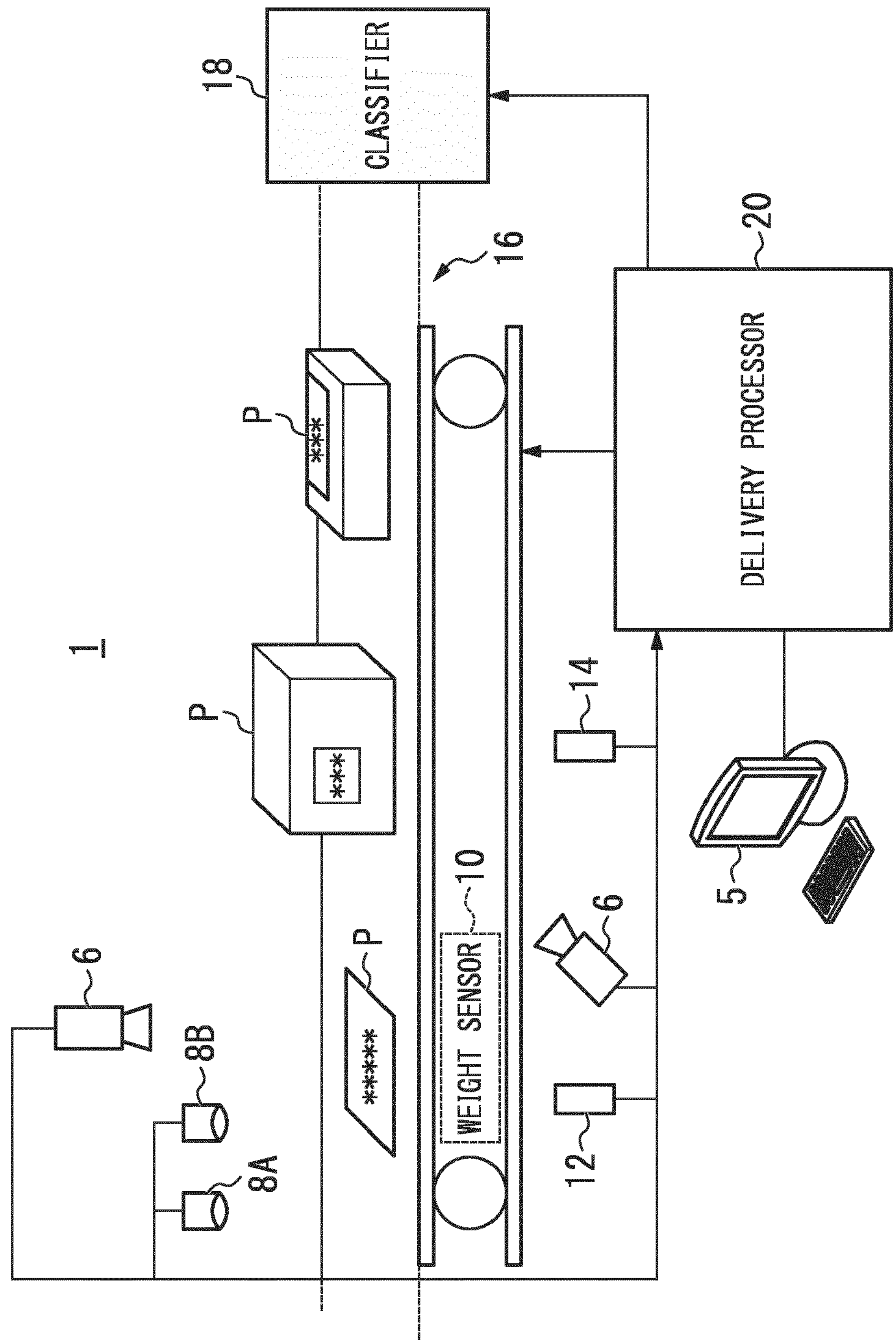
CLASSIFIER
18
16
20
DELIVERY PROCESSOR
1
P
P
P
***
***
****
WEIGHT SENSOR
10
6
6
8A
8B
12
14
5

FIG. 2

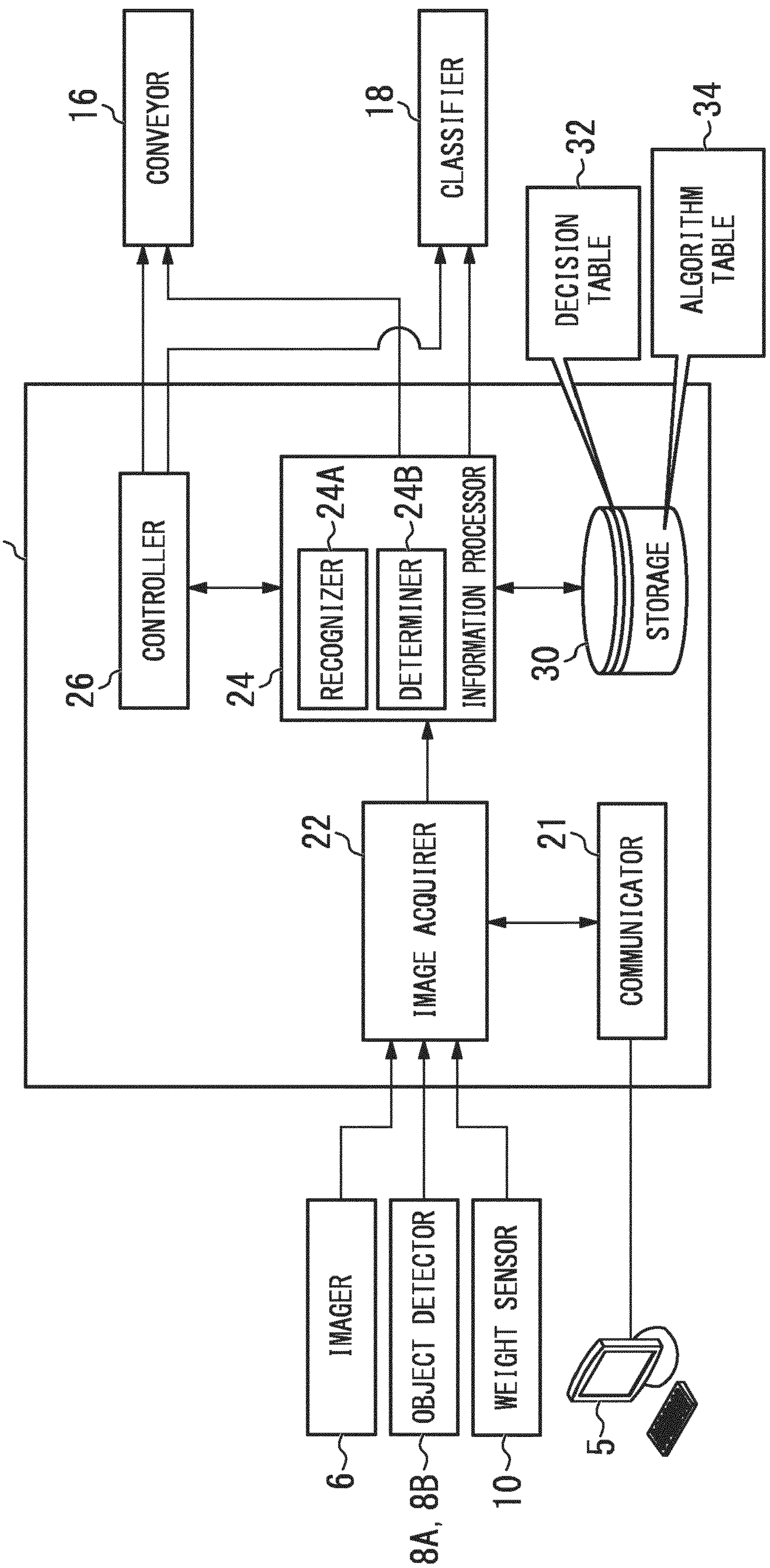
16
CONVEYOR
18
CLASSIFIER
32
DECISION TABLE
34
ALGORITHM TABLE
20
26
CONTROLLER
24
24A
RECOGNIZER
24B
DETERMINER
INFORMATION PROCESSOR
30
STORAGE
22
IMAGE ACQUIRER
21
COMMUNICATOR
6
IMAGER
8A, 8B
OBJECT DETECTOR
10
WEIGHT SENSOR
5

FIG. 3

32

| TYPE | SIZE | THICKNESS | WEIGHT |
|---|---|---|---|
| TYPE A | WITHIN 120MM X 235MM | <100MM | <1,000G |
| TYPE B | WITHIN 240MM X 332MM | 100MM TO 200MM | 1,000G OR MORE |

FIG. 4

34

| TYPE | RECOGNITION ALGORITHM |
|---|---|
| TYPE A | A |
| TYPE B | B |

FIG. 5

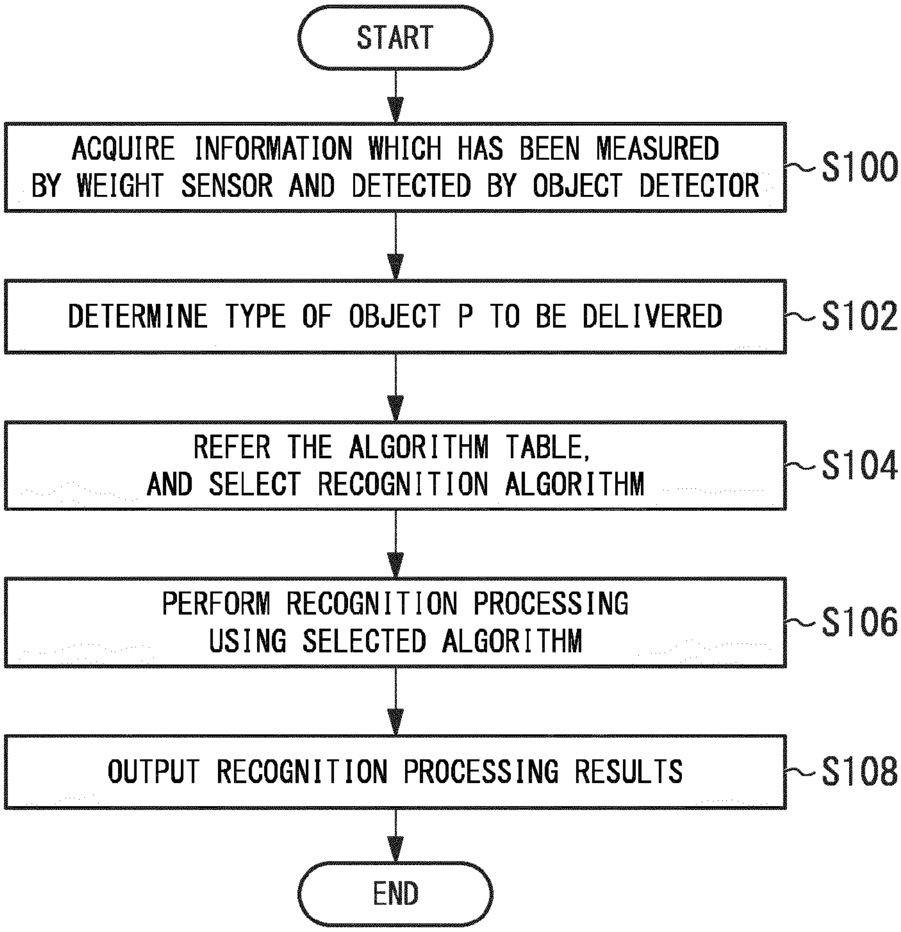
START
ACQUIRE INFORMATION WHICH HAS BEEN MEASURED BY WEIGHT SENSOR AND DETECTED BY OBJECT DETECTOR
S100
DETERMINE TYPE OF OBJECT P TO BE DELIVERED
S102
REFER THE ALGORITHM TABLE, AND SELECT RECOGNITION ALGORITHM
S104
PERFORM RECOGNITION PROCESSING USING SELECTED ALGORITHM
S106
OUTPUT RECOGNITION PROCESSING RESULTS
S108
END

FIG. 6

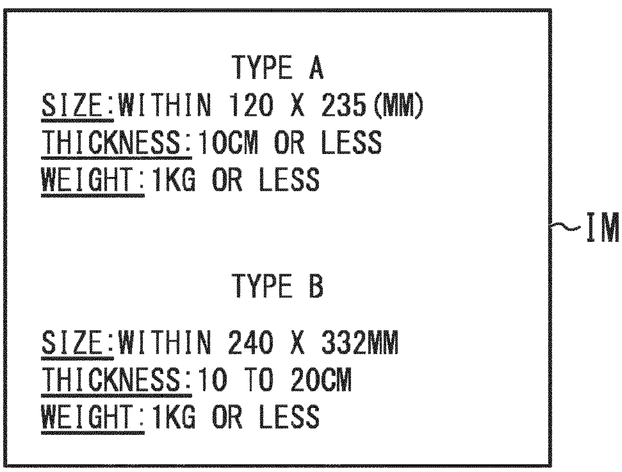
TYPE A
SIZE: WITHIN 120 X 235 (MM)
THICKNESS: 10CM OR LESS
WEIGHT: 1KG OR LESS
TYPE B
SIZE: WITHIN 240 X 332MM
THICKNESS: 10 TO 20CM
WEIGHT: 1KG OR LESS
IM

FIG. 7

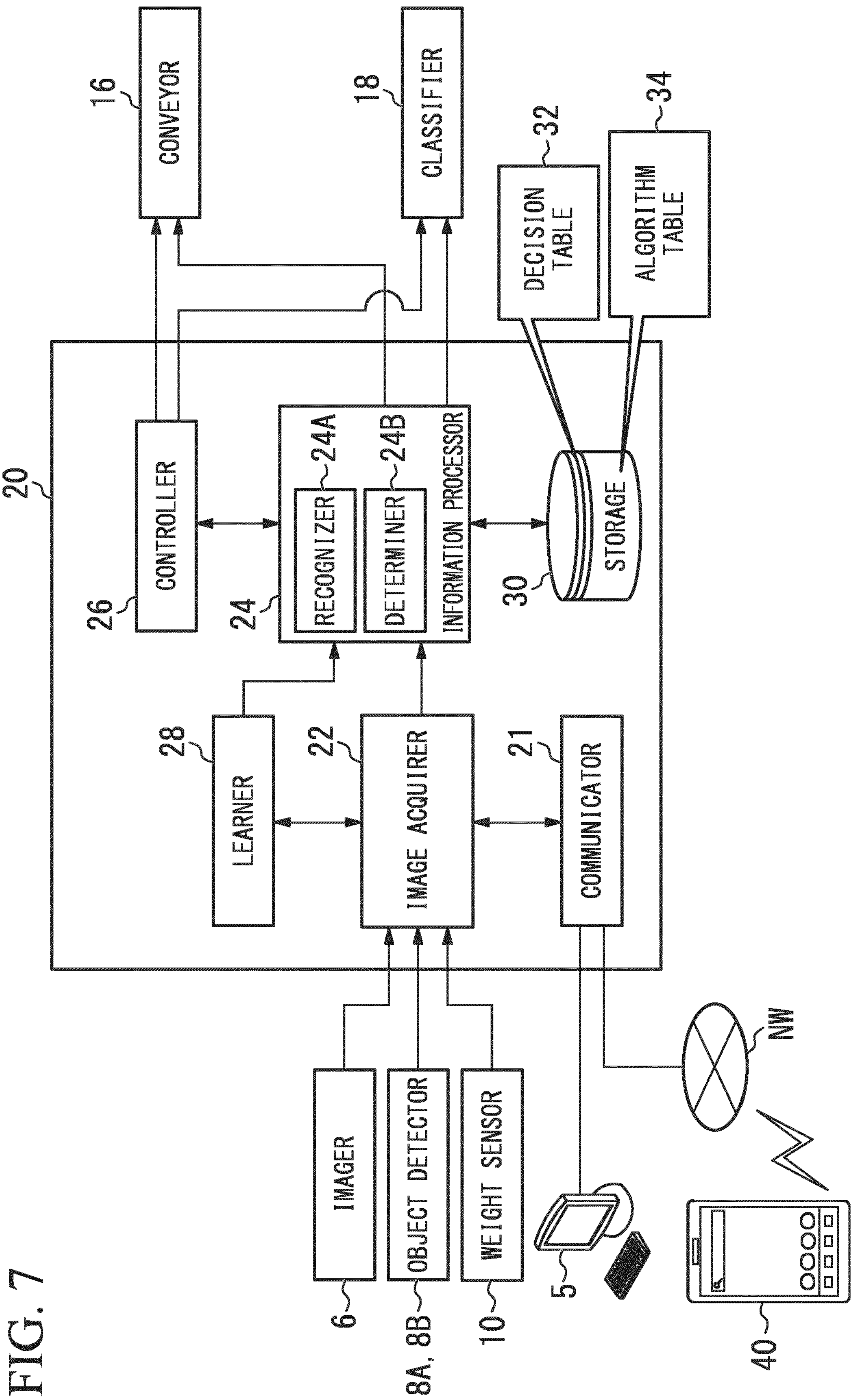
16
CONVEYOR
18
CLASSIFIER
32
DECISION TABLE
34
ALGORITHM TABLE
20
26
CONTROLLER
24
RECOGNIZER
24A
DETERMINER
24B
INFORMATION PROCESSOR
30
STORAGE
28
LEARNER
22
IMAGE ACQUIRER
21
COMMUNICATOR
NW
6
IMAGER
8A, 8B
OBJECT DETECTOR
10
WEIGHT SENSOR
5
40

FIG. 8

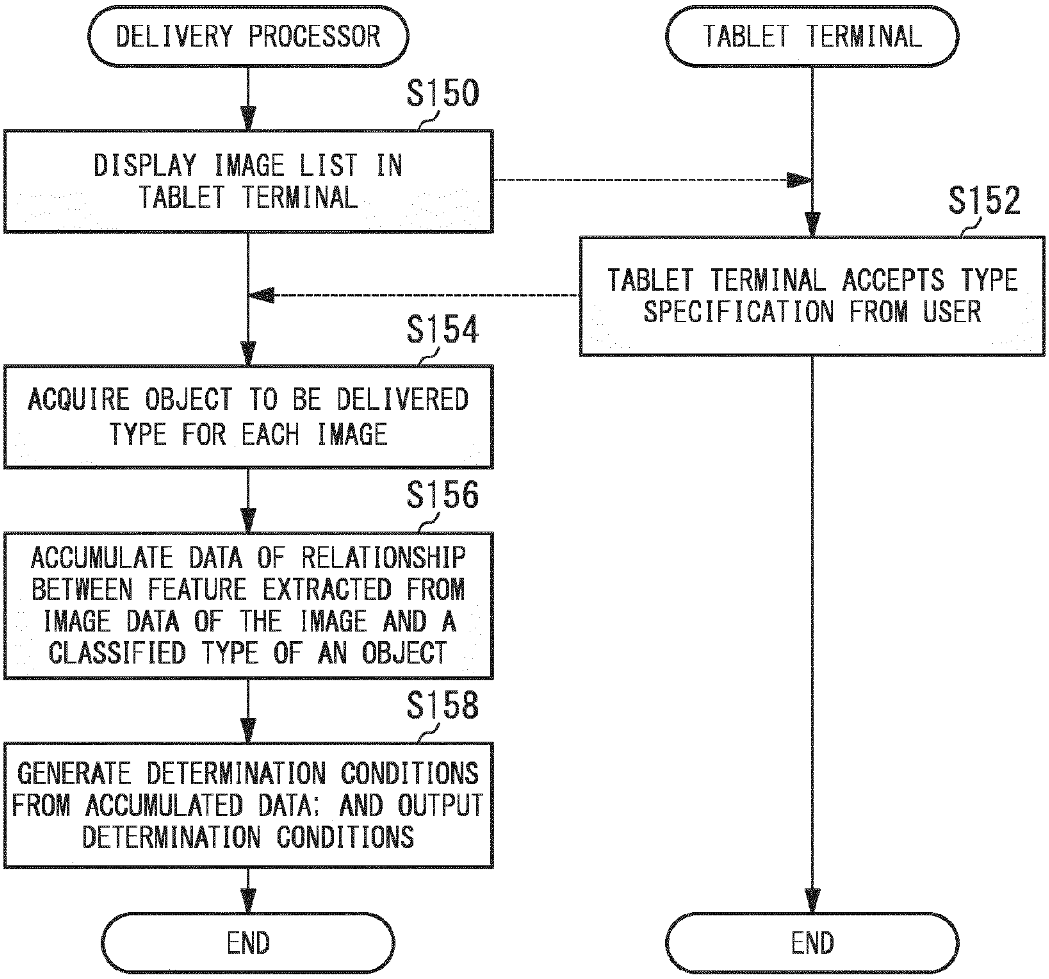
DELIVERY PROCESSOR
TABLET TERMINAL
S150
DISPLAY IMAGE LIST IN TABLET TERMINAL
S152
TABLET TERMINAL ACCEPTS TYPE SPECIFICATION FROM USER
S154
ACQUIRE OBJECT TO BE DELIVERED TYPE FOR EACH IMAGE
S156
ACCUMULATE DATA OF RELATIONSHIP BETWEEN FEATURE EXTRACTED FROM IMAGE DATA OF THE IMAGE AND A CLASSIFIED TYPE OF AN OBJECT
S158
GENERATE DETERMINATION CONDITIONS FROM ACCUMULATED DATA; AND OUTPUT DETERMINATION CONDITIONS
END
END

FIG. 9

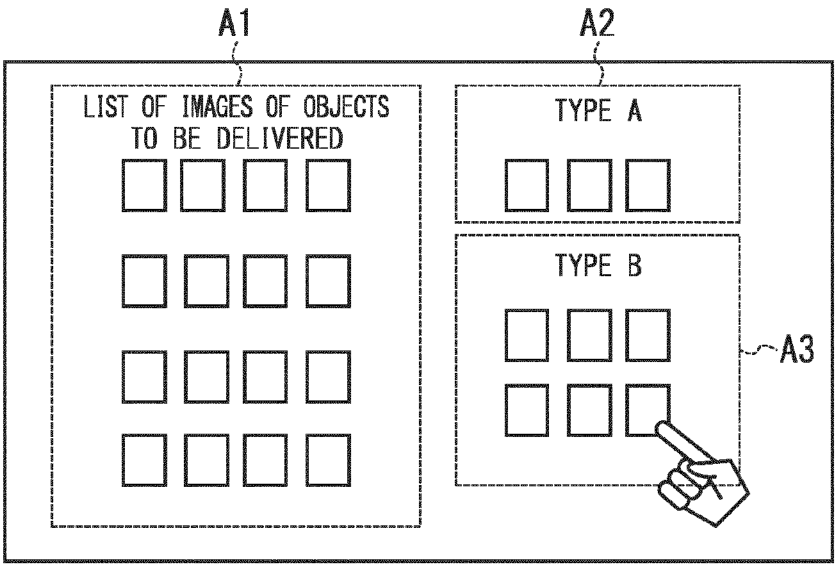
A1
A2
LIST OF IMAGES OF OBJECTS TO BE DELIVERED
TYPE A
TYPE B
A3

FIG. 10

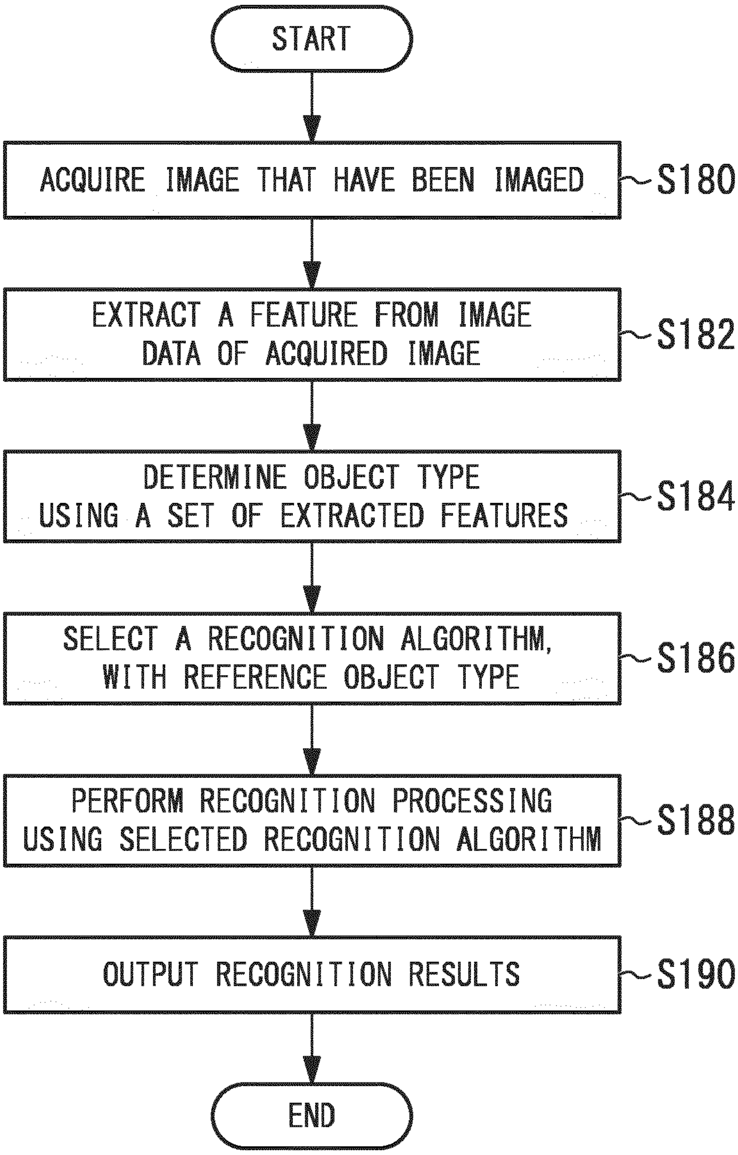
START
ACQUIRE IMAGE THAT HAVE BEEN IMAGED
S180
EXTRACT A FEATURE FROM IMAGE DATA OF ACQUIRED IMAGE
S182
DETERMINE OBJECT TYPE USING A SET OF EXTRACTED FEATURES
S184
SELECT A RECOGNITION ALGORITHM, WITH REFERENCE OBJECT TYPE
S186
PERFORM RECOGNITION PROCESSING USING SELECTED RECOGNITION ALGORITHM
S188
OUTPUT RECOGNITION RESULTS
S190
END

FIG. 11

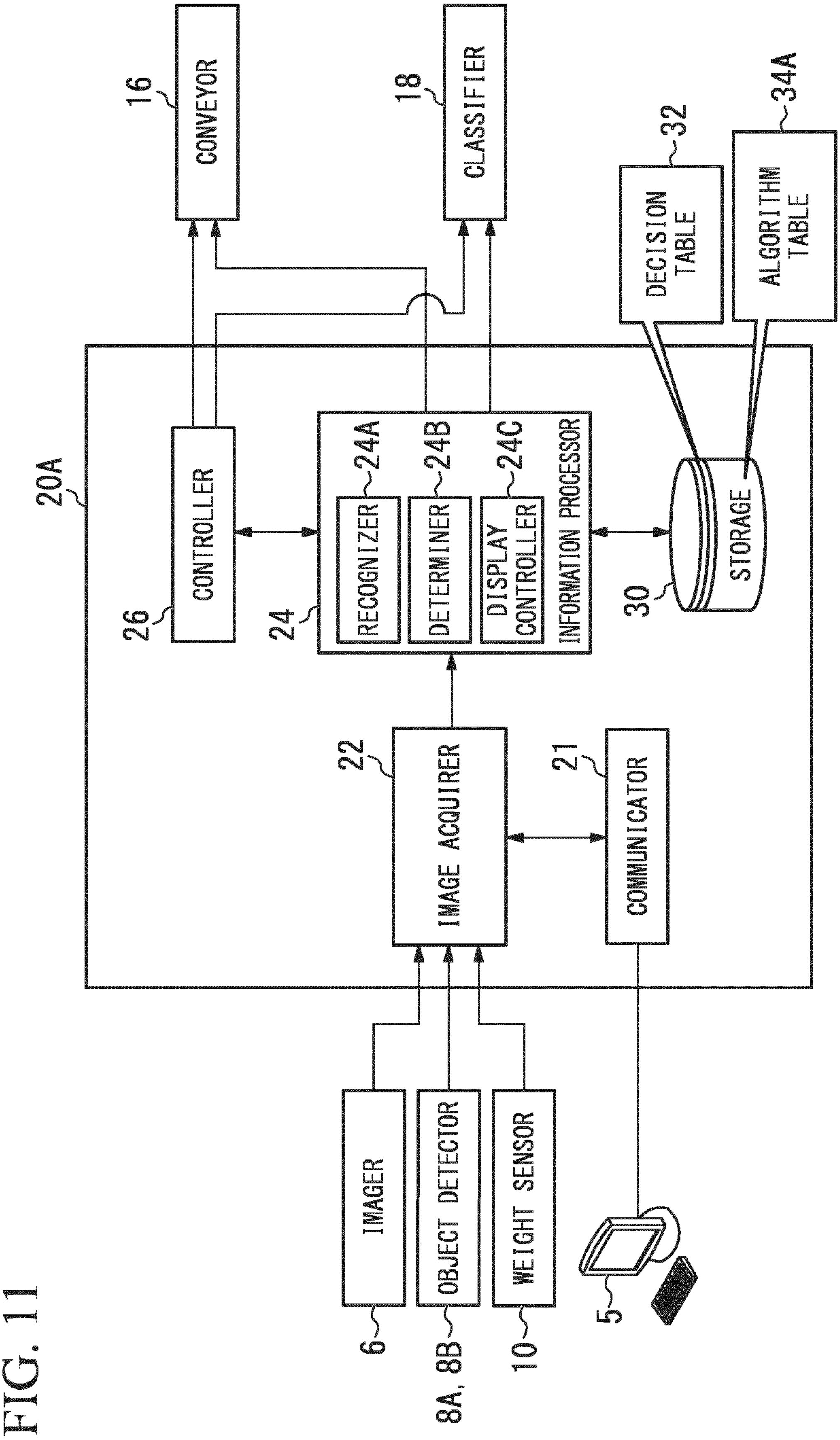
16
CONVEYOR
18
CLASSIFIER
32
DECISION TABLE
34A
ALGORITHM TABLE
20A
26
CONTROLLER
24
RECOGNIZER
24A
DETERMINER
24B
DISPLAY CONTROLLER
24C
INFORMATION PROCESSOR
30
STORAGE
22
IMAGE ACQUIRER
21
COMMUNICATOR
6
IMAGER
8A, 8B
OBJECT DETECTOR
10
WEIGHT SENSOR
5

FIG. 12

34A

| TYPE | RECOGNITION ALGORITHM | CONVEYANCE SPEED |
|---|---|---|
| TYPE A | A | FAST |
| TYPE B | B | SLOW |

FIG. 13

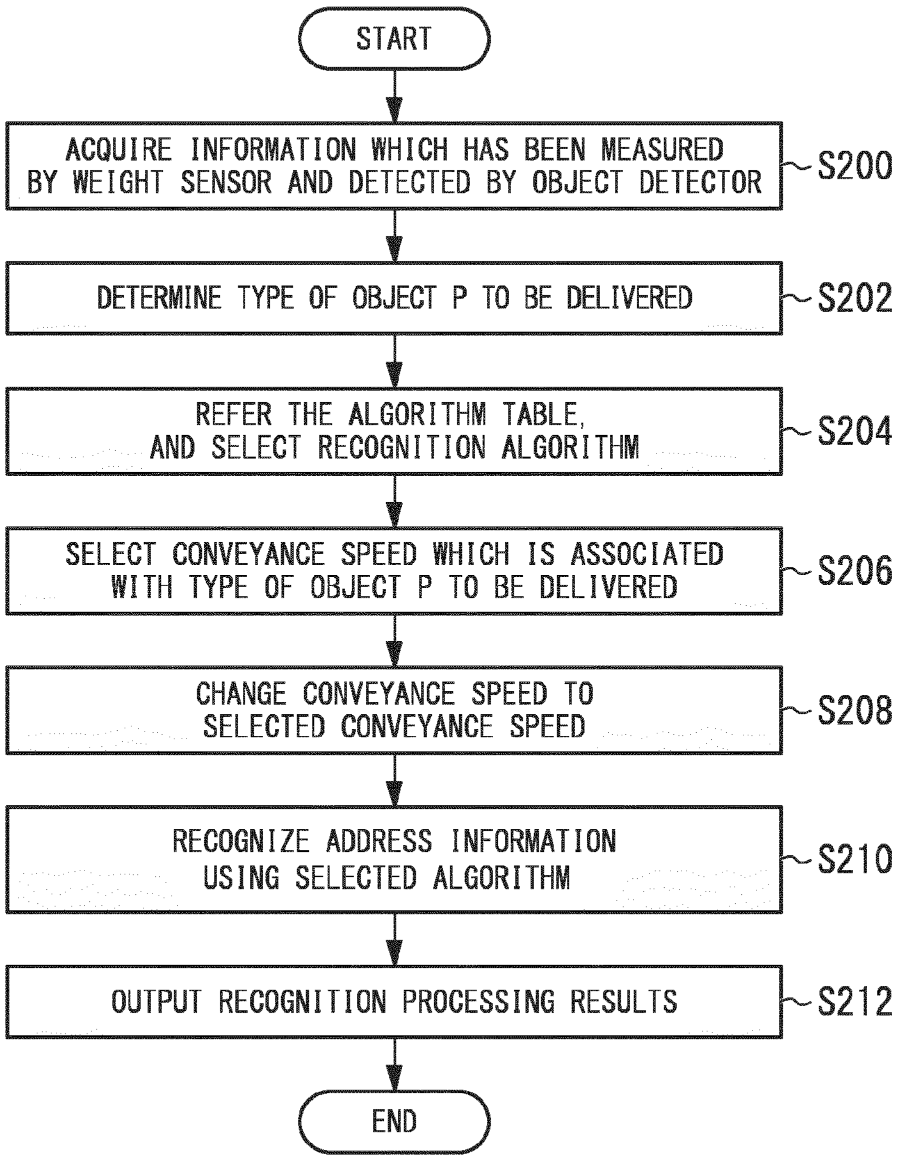

FIG. 14

| IDENTIFICATION NUMBER | TYPE | RECOGNITION ALGORITHM | CONVEYANCE SPEED |
|---|---|---|---|
| NO. 1 | TYPE A | RECOGNITION ALGORITHM A | FAST |
| NO. 2 | TYPE B | RECOGNITION ALGORITHM B | SLOW |
| NO. 3 | TYPE B | RECOGNITION ALGORITHM B | SLOW |
| NO. 4 | TYPE A | RECOGNITION ALGORITHM A | FAST |
| NO. 5 | TYPE A | RECOGNITION ALGORITHM A | FAST |
| NO. 6 | TYPE B | RECOGNITION ALGORITHM B | SLOW |
| . | . | . | . |
| . | . | . | . |
| . | . | . | . |
| . | . | . | . |

FIG. 15

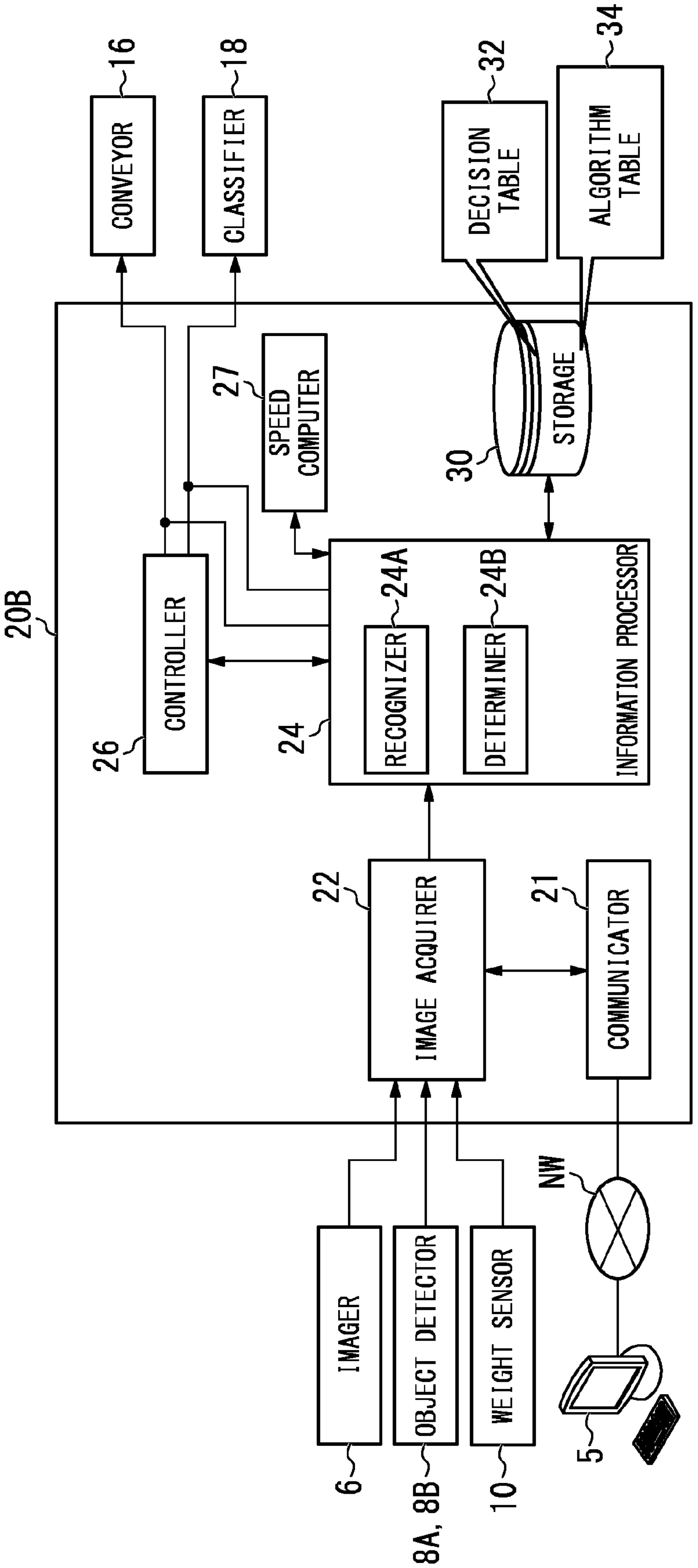
CONVEYOR
16
CLASSIFIER
18
DECISION TABLE
32
ALGORITHM TABLE
34
20B
SPEED COMPUTER
27
STORAGE
30
CONTROLLER
26
24
RECOGNIZER
24A
DETERMINER
24B
INFORMATION PROCESSOR
IMAGE ACQUIRER
22
COMMUNICATOR
21
IMAGER
6
OBJECT DETECTOR
8A, 8B
WEIGHT SENSOR
10
NW
5

FIG. 16

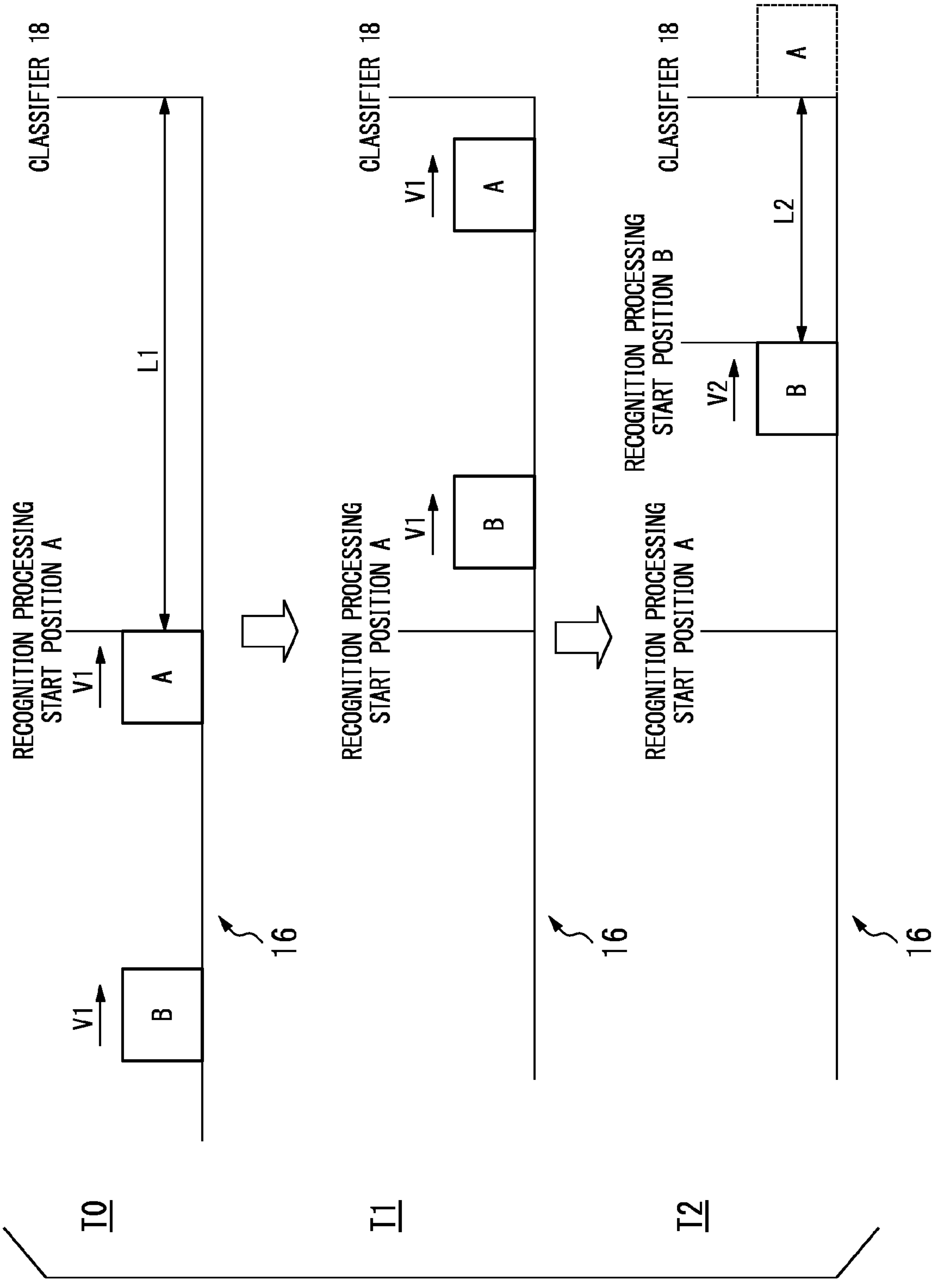
T0
T1
T2
CLASSIFIER 18
RECOGNITION PROCESSING START POSITION A
RECOGNITION PROCESSING START POSITION B
L1
L2
V1
V2
A
B
16

FIG. 17

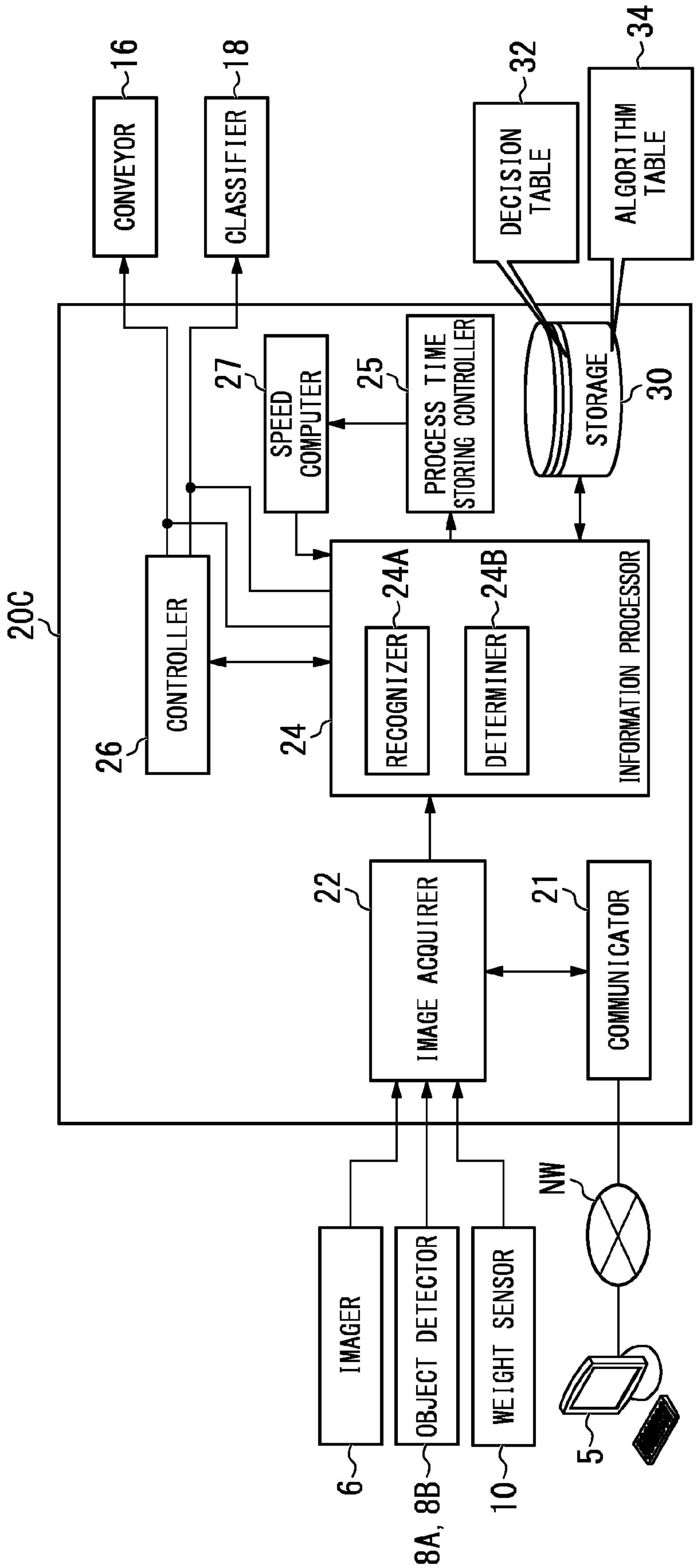
20C
CONVEYOR
16
CLASSIFIER
18
DECISION TABLE
32
ALGORITHM TABLE
34
SPEED COMPUTER
27
PROCESS TIME STORING CONTROLLER
25
STORAGE
30
CONTROLLER
26
RECOGNIZER
24A
DETERMINER
24B
INFORMATION PROCESSOR
24
IMAGE ACQUIRER
22
COMMUNICATOR
21
IMAGER
6
OBJECT DETECTOR
8A, 8B
WEIGHT SENSOR
10
NW
5

FIG. 18

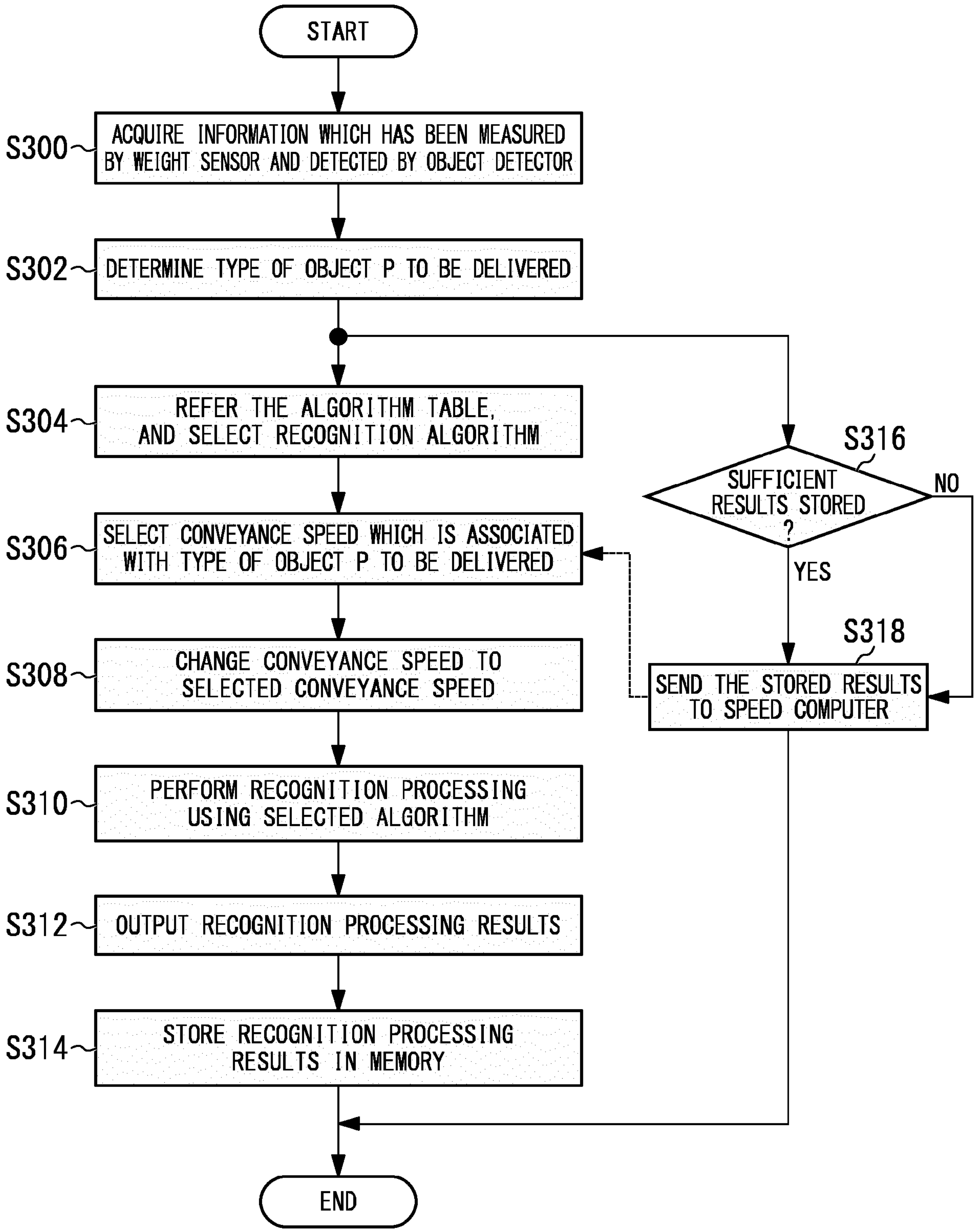
START
S300
ACQUIRE INFORMATION WHICH HAS BEEN MEASURED BY WEIGHT SENSOR AND DETECTED BY OBJECT DETECTOR
S302
DETERMINE TYPE OF OBJECT P TO BE DELIVERED
S304
REFER THE ALGORITHM TABLE, AND SELECT RECOGNITION ALGORITHM
S306
SELECT CONVEYANCE SPEED WHICH IS ASSOCIATED WITH TYPE OF OBJECT P TO BE DELIVERED
S308
CHANGE CONVEYANCE SPEED TO SELECTED CONVEYANCE SPEED
S310
PERFORM RECOGNITION PROCESSING USING SELECTED ALGORITHM
S312
OUTPUT RECOGNITION PROCESSING RESULTS
S314
STORE RECOGNITION PROCESSING RESULTS IN MEMORY
S316
SUFFICIENT RESULTS STORED ?
NO
YES
S318
SEND THE STORED RESULTS TO SPEED COMPUTER
END

Europäisches Patentamt
European Patent Office
Office européen des brevets

# EUROPEAN SEARCH REPORT

Application Number
EP 15 20 0109

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 412 453 A1 (NEC CORP [JP]) 1 February 2012 (2012-02-01) * the whole document * ----- | 1-10 | INV. G06Q10/08 B07C3/14 G06K9/00 G06K9/20 |
| X | US 2011/215035 A1 (CAILLON CHRISTOPHE [FR] ET AL) 8 September 2011 (2011-09-08) * the whole document * ----- | 1-10 | |
| X | WO 02/20183 A1 (US POSTAL SERVICE [US]; JOHNSON LORI [US]; DONOHUE GERARD O [US]) 14 March 2002 (2002-03-14) * the whole document * ----- | 1-10 | |
| Y | US 2014/270548 A1 (KAMIYA YASUNORI [JP]) 18 September 2014 (2014-09-18) * the whole document * ----- | 1-10 | |
| Y | US 2015/023602 A1 (WNUK KAMIL [US] ET AL) 22 January 2015 (2015-01-22) * the whole document * ----- | 1-10 | TECHNICAL FIELDS SEARCHED (IPC) |
| Y | US 5 311 999 A (MALOW SIEGMAR [DE] ET AL) 17 May 1994 (1994-05-17) * the whole document * ----- | 1-10 | G06Q B07C G06K |
| Y | US 2013/329077 A1 (YU ZHOU [CN]) 12 December 2013 (2013-12-12) * the whole document * ----- | 1-10 | |
| Y | US 4 992 649 A (MAMPE JOHN J [US] ET AL) 12 February 1991 (1991-02-12) * the whole document * ----- | 1-10 | |

The present search report has been drawn up for all claims

1

| Place of search | Date of completion of the search | Examiner |
|---|---|---|
| Munich | 22 February 2016 | Mülthaler, Evelyn |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 15 20 0109

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2016

| Patent document cited in search report | Publication date | Patent family member(s) | Publication date |
|---|---|---|---|
| EP 2412453 A1 | 01-02-2012 | EP 2412453 A1 | 01-02-2012 |
| | | JP 5407485 B2 | 05-02-2014 |
| | | JP 2010227885 A | 14-10-2010 |
| | | WO 2010110190 A1 | 30-09-2010 |
| US 2011215035 A1 | 08-09-2011 | AT 537915 T | 15-01-2012 |
| | | CA 2730055 A1 | 14-01-2010 |
| | | CN 102046304 A | 04-05-2011 |
| | | DK 2300175 T3 | 26-03-2012 |
| | | EP 2300175 A1 | 30-03-2011 |
| | | ES 2379330 T3 | 25-04-2012 |
| | | FR 2933628 A1 | 15-01-2010 |
| | | JP 5456776 B2 | 02-04-2014 |
| | | JP 2011527235 A | 27-10-2011 |
| | | PT 2300175 E | 19-03-2012 |
| | | US 2011215035 A1 | 08-09-2011 |
| | | WO 2010004203 A1 | 14-01-2010 |
| WO 0220183 A1 | 14-03-2002 | AU 9326501 A | 22-03-2002 |
| | | US 2003182017 A1 | 25-09-2003 |
| | | WO 0220183 A1 | 14-03-2002 |
| US 2014270548 A1 | 18-09-2014 | CN 104050620 A | 17-09-2014 |
| | | DE 102014103136 A1 | 18-09-2014 |
| | | JP 5708689 B2 | 30-04-2015 |
| | | JP 2014178736 A | 25-09-2014 |
| | | US 2014270548 A1 | 18-09-2014 |
| US 2015023602 A1 | 22-01-2015 | NONE | |
| US 5311999 A | 17-05-1994 | AT 107544 T | 15-07-1994 |
| | | AU 635607 B2 | 25-03-1993 |
| | | CA 2045694 A1 | 24-06-1991 |
| | | CZ 9006566 A3 | 15-12-1993 |
| | | DE 3942932 A1 | 27-06-1991 |
| | | DE 59006241 D1 | 28-07-1994 |
| | | DK 0462256 T3 | 01-08-1994 |
| | | EP 0462256 A1 | 27-12-1991 |
| | | ES 2056635 T3 | 01-10-1994 |
| | | HR P930034 A2 | 28-02-1995 |
| | | IE 904708 A1 | 17-07-1991 |
| | | JP 3207419 B2 | 10-09-2001 |
| | | JP H04503921 A | 16-07-1992 |
| | | NO 913152 A | 13-08-1991 |
| | | NZ 236633 A | 27-04-1994 |
| | | PL 288520 A1 | 02-12-1991 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 15 20 0109

This annex lists the patent family members relating to the patent documents cited in the above-mentioned European search report. The members are as contained in the European Patent Office EDP file on The European Patent Office is in no way liable for these particulars which are merely given for the purpose of information.

22-02-2016

| Patent document cited in search report | Publication date | Patent family member(s) | Publication date |
|---|---|---|---|
| | | RU 2070101 C1 | 10-12-1996 |
| | | US 5311999 A | 17-05-1994 |
| | | WO 9109688 A1 | 11-07-1991 |
| | | YU 241990 A | 15-11-1994 |
| US 2013329077 A1 | 12-12-2013 | CN 103489149 A | 01-01-2014 |
| | | US 2013329077 A1 | 12-12-2013 |
| US 4992649 A | 12-02-1991 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015050703 A